# EUROPÄISCHE PATENTSCHRIFT

(11) **EP 2 022 314 B1**
(45) Veröffentlichungstag und Bekanntmachung des Hinweises auf die Patenterteilung: **22.02.2017**
(21) Anmeldenummer: 08103932.3
(22) Anmeldetag: 13.05.2008
(51) Int. Cl.: A01D 43/08

(54) **Überladeeinrichtung für einen Feldhäcksler**
Transfer device for a chuff cutter
Dispositif de transbordement pour une ramasseuse-hacheuse

(30) Priorität: 09.08.2007 DE 102007037710
(43) Veröffentlichungstag der Anmeldung: 11.02.2009
(73) Patentinhaber: CLAAS Saulgau GmbH, 88348 Bad Saulgau (DE)
(72) Erfinder: Tilly, Thomas, 48231 Warendorf (DE); Isfort, Heinrich, 48249 Dülmen (DE); Landwehr, Karl-Heinz, 49170 Hagen (DE)

(56) Entgegenhaltungen:
- EP-A1- 1 344 446
- DE-A1- 2 133 203
- DE-A1- 19 641 211
- FR-A- 1 502 148

## Beschreibung

Die Erfindung betrifft einen Auswurfkrümmer bestehend aus wenigstens zwei miteinander verbundenen Segmenten zum Variieren der Förderlänge für eine landwirtschaftliche Erntemaschine, insbesondere einen Feldhäcksler, wobei wenigstens ein Segment aus einem einteilig geformten, einen abdeckungsfreien Bereich aufweisenden, U- förmig ausgebildeten Grundkörper gebildet ist und die Verbindung der wenigstens zwei Segmente wenigstens bereichsweise überlappend erfolgt, wobei das in Bezug auf die Fließrichtung des Emtegutstromes hintere Segment, das vordere Segment im Überlappungsbereich umgreift.

Feldhäcksler dienen in der Landwirtschaft zum Abernten und Aufsammeln von Erntegut, beispielsweise Mais oder Gras. Die Übergabe des geernteten und mittels weiterer Arbeitsorgane aufbereiteten Ernteguts erfolgt in der Regel nach Beschleunigung mittels eines Nachbeschleunigers über eine Überladeeinrichtung auf ein nebenherfahrendes Transportfahrzeug.

Derartige Überladeeinrichtungen sind in unterschiedlichsten Ausführungen einteilig oder mehrteilig allgemein bekannt, die sich in der Regel aus zusammengesetzten massiven, mittels Schweißnaht verbundenen Blechen aufbauen, die regelmäßig einen rechteckigen Querschnitt bilden. Aus der DE 11 65 333 ist es auch bekannt bei Anbauhäckslern auf runde Querschnitte für die Gestaltung der Überladeeinrichtung zurückzugreifen. In der DE 103 35 583 ist dagegen eine Überladeeinrichtung offenbart, die über mindestens einen Teilbereich trapez- oder kurvenförmig ausgebildet ist, um Ansammlungen von Erntegut am Boden und an den unteren Bereichen der Seitenwände zu vermeiden. Im weiteren ist es bekannt die Überladeeinrichtungen einteilig oder mehrteilig auszuführen. Die Verbindung der einzelnen Segmente erfolgt über Flanschverbindungen. Nachteilig an den bisher bekannten Ausführungsformen ist der hohe Fertigungs- und Kostenaufwand, welcher mit zunehmender Länge entsprechend ansteigt.

Im weiteren wird in der DE 10 2005 016 A1 vorgeschlagen, dass die Überladeeinrichtung aus einem rahmen- und/oder gitterförmigen Stützzusammenbau ausgebildet ist. Auch dieser Aufbau erfordert einen besonders hohen Fertigungsaufwand. Eine mögliche Verbindung mehrerer Segmente, um eine längere bzw. kürzere Ausführung der Überladeeinrichtung zu erhalten, zwecks Anpassung an verschiedene Einsatzbedingungen, wird nicht offenbart.

Aus der Druckschrift EP 1 344 446 A1 ist eine teleskopierbare Austrageinrichtung für eine Erntemaschine bekannt, die zwei Elemente umfasst, die während des Betriebs der Erntemaschine verschiebbar sind, so dass sich die Austrageinrichtung verlängert.

Der Erfindung liegt deshalb die Aufgabe zugrunde, die Nachteile des zitierten Standes der Technik zu vermeiden und eine Überladeeinrichtung für eine landwirtschaftliche Erntemaschine der eingangs genannten Art derart weiterzuentwickeln, dass mit geringem Fertigungsaufwand eine für variable Bedingungen einsetzbare Überladeeinrichtung geschaffen wird, unter Beibehaltung der erforderlichen Stabilität.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Dadurch, dass wenigstens ein Segment der Überladeeinrichtung aus einem einteilig geformten, einen abdeckungsfreien Bereich aufweisenden Grundkörper gebildet ist und die Verbindung der wenigstens zwei Segmente wenigstens bereichsweise überlappend und im Überlappungsbereich in Bezug auf die Fließrichtung des Erntegutstromes ansatzfrei erfolgt, ist eine Reduzierung des Fertigungs- und Kostenaufwands erreichbar. Insbesondere dadurch, dass wenigstens ein Segment aus einem einteilig geformten Grundkörper besteht, kann der üblicherweise notwendige Fertigungsaufwand zum Verschweißen mehrerer Einzelelemente, vermieden werden. Dass die Verbindung der wenigstens zwei Segmente überlappend erfolgt, hat zum Vorteil, dass die üblich Verwendung findenden und einen hohen Fertigungsaufwand bedeutenden Flanschverbindungen nicht mehr nötig sind, ohne Stabilitätsverluste in Kauf nehmen zu müssen.

In einer vorteilhaften Weiterbildung der Erfindung erfolgt die Fixierung der sich überlappenden Bereiche der wenigstens zwei Segmente außerhalb des Erntegutstroms, so dass der Erntegutstrom nicht durch hineinragende Teile der Fixierungselemente behindert wird.

Im einfachsten Fall ist der einteilige Grundkörper U-förmig ausgebildet, so dass neben einer Reduzierung des Fertigungsaufwandes, weiterhin ein optimaler Erntegutfluss innerhalb der Überladeeinrichtung möglich ist.

In weiterer vorteilhafter Ausgestaltung der Erfindung ist der abdeckungsfreie Bereich des einteilig ausgeführten Grundkörpers des Segmentes in Bezug auf die Fließrichtung des Erntegutstromes ansatzfrei verschlossen, so dass der Erntegutstrom ungehindert und mit möglichst niedrigen Reibungsverlusten aus der Erntemaschine auf ein Transportfahrzeug überladen werden kann. Vorzugsweise wird der abdeckungsfreie Bereich mittels eines auswechselbaren Verschleißbleches überdeckt, so dass im Verschleißfall ein einfacher und schneller Austausch möglich ist.

Dadurch, dass das in Bezug auf die Fließrichtung des Erntegutstromes hintere Segment das vordere Segment im überlappenden Bereich passgenau umfasst, kann auf konstruktiv einfache Weise eine stabile Verbindung zwischen beiden Segmenten erzielt werden. Erfindungsgemäß ist dafür der das vordere Segment umgreifende Bereich des hinteren Segmentes entsprechend der Wandstärke des vorderen Segmentes nach außen gekröpft ausgebildet, so dass ein ansatzfreier Erntegutfluss innerhalb der Überladeeinrichtung gewährleistbar ist.

Zweckmäßigerweise enthält der nach außen gekröpfte Bereich wenigstens eine sich umfangsseitig und nach außen gewölbt erstreckende Vertiefung, so dass dort ein Dichtungselement zum Abdichten der Verbindung der beiden Segmente einbringbar ist, um ein Entweichen des im Erntegutstrom vorhandenen Erntegutsaft zu vermeiden.

Vorteilhaft sind im U-förmigen Grundkörper des wenigstens einen Segmentes obenseitig, jeweils seitlich außerhalb des Erntegutstromes liegend, Führungsflächen integriert, wobei die Fixierung des wenigstens einen Verschleißbleches an den Segmenten auf den Führungsflächen erfolgt, um sicherzustellen, dass in Förderrichtung des Erntegutstromes keine Absätze oder Ansätze vorhanden sind, an denen sich das Erntegut aufstauen oder festsetzen kann.

In einer weiteren vorteilhaften Ausgestaltung der Erfindung werden die Versorgungsleitungen für die Stelleinrichtungen und die Sensorik in außenseitig an den Segmenten angeordneten Versorgungsschächten geführt, wobei im Überlappungsbereich der Segmente Kupplungselemente vorgesehen sind, die eine durchgängige Verbindung der Versorgungsleitungen herstellen.

Weitere vorteilhafte Ausgestaltungen sind Gegenstand weiterer Unteransprüche und werden nachfolgend anhand von Zeichnungen näher erläutert.

### Es zeigen:

- Figur 1:: eine Seitenansicht eines Feldhäckslers mit einer erfindungsgemäßen Überladeeinrichtung
- Figur 2:: eine perspektivische Ansicht auf die verbindbaren Grundkörper der zwei Segmente der Überladeeinrichtung
- Fig. 3:: die Einzelheit A aus Fig. 2
- Fig. 4:: die Einzelheit B aus Fig. 1

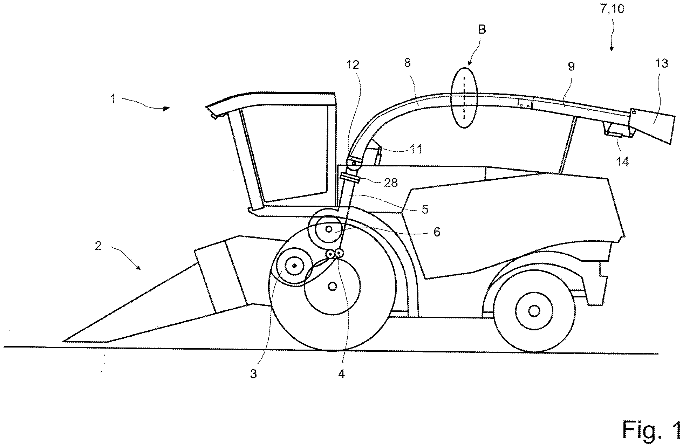

Figur 1 zeigt einen selbstfahrenden Feldhäcksler 1 in schematischer Seltenansicht. Das auf einer landwirtschaftlich genutzten Fläche mit dem Erntevorsatz 2 des selbstfahrenden Feldhäcksler 1 geschnittene Erntegut gelangt nach Zerkleinerung in der Häckseleinrichtung 3 und nach einer weiter Aufbereitung in der Konditioniereinrichtung 4 in den Auswurfschacht 5, wo die auf das Erntegut in den vorangegangenen Be- und Verarbeitungsstationen 3, 4 übertragene Förderenergie für den Gutaustrag aus dem Feldhäcksler 1 mit Hilfe des Nachbeschleunigers 6 weiter erhöht wird. Mit einer hohen Förderenergie beaufschlagt, kommt das Erntegut in die freistehende als Auswurfkrümmer 7 bezeichnete und im Ausführungsbeispiel aus zwei Segmenten 8, 9 bestehende Überladeeinrichtung 10 und wird über diesen Auswurfkrümmer 7 an ein nicht dargestelltes Transportfahrzeug übergeben. Durch die Segmentbauweise kann die wirksame Förderlänge der Überladeeinrichtung 10 entsprechend den jeweiligen Übergabebedingungen variiert werden.

Der Auswurfkrümmer 7 ist unter Verwendung eines Drehkranzes 28 am Auswurfschacht 5 des Feldhäckslers 1 verdrehbar angelenkt und kann mit Hilfe der Verstelleinrichtung 11 um einen Drehpunkt 12 verschwenkt werden, um die Auswurfhöhe im Interesse einer vollständigen Nutzung des zur Verfügung stehenden Transportvolumens zu verändern. Der Auswurfkrümmer 7 schließt mit einer endseitig angeordneten Auswurfklappe 13 ab, die durch eine Stelleinrichtung 14 steuerbar ist, um den Erntegutstrom bei der Gutübergabe an das Transportfahrzeug zusätzlich zu steuern und zu lenken.

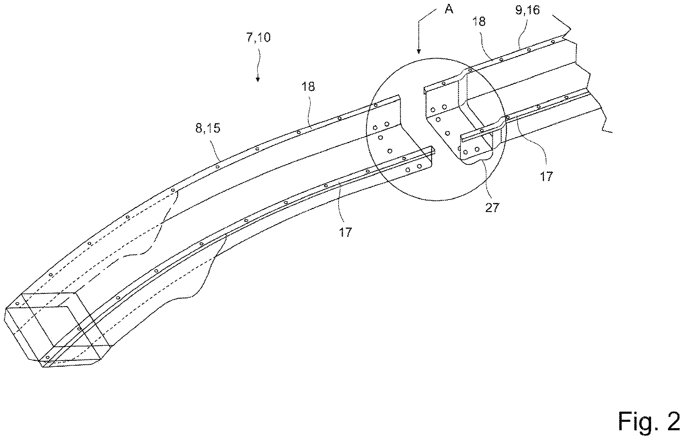

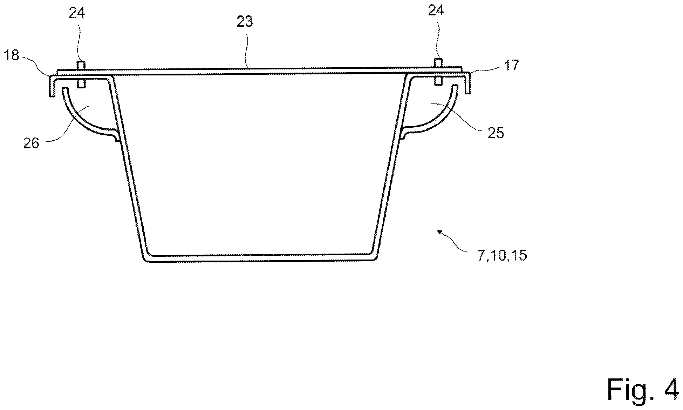

Erfindungsgemäß und in Figur 2 dargestellt, bestehen die zwei Segmente 8, 9 jeweils aus einem einteilig geformten, einen abdeckungsfreien Bereich aufweisen den U- förmig ausgebildeten Grundkörper 15,16, wobei die Verbindung der Grundkörper 15, 16 der wenigstens zwei Segmente 8,9, entgegen herkömmlicher Flanschverbindungen, bereichsweise überlappend erfolgt, so dass vorteilhaft eine Reduzierung des Fertigungs- und Kostenaufwandes erreicht wird. Jeweils obenseitig und seitlich außerhalb des Erntegutstromes liegend, sind in den Grundkörpern 15, 16 der Segmente 8, 9 Führungsflächen 17, 18, zur Aufnahme eines in Fig. 4 näher dargestellten Verschleißbleches integriert. Die Überlappung der Segmente 8,9 erfolgt in der Weise, dass der vordere Bereich des in Fließrichtung des Erntegutstromes liegenden hinteren Segmentes 9 das vordere Segment 8 passgenau endseitig umgreift. Um einen ansatzfreien Erntegutfuß innerhalb der Überladeeinrichtung 10 im Überlappungsbereich 27 zu gewährleisten, ist der das vordere Segment 8 umgreifende Überlappungsbereich 27 des hinteren Segmentes 9 entsprechend der Wandstärke des Grundkörpers 15 des vorderen Segmentes 8 nach außen gekröpft ausgebildet.

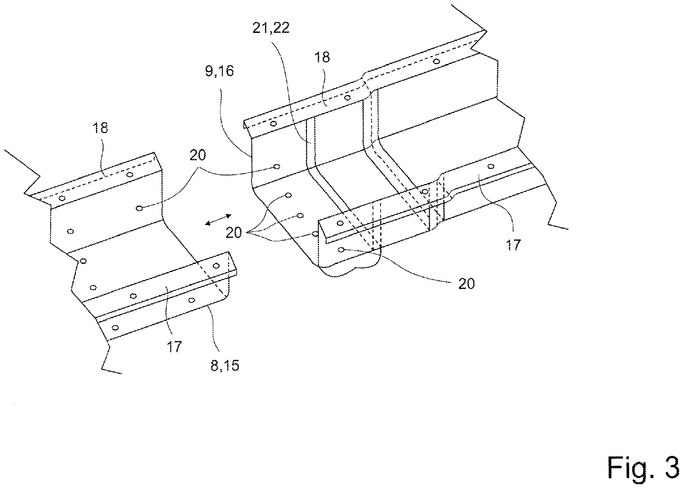

Wie in Figur 3 nun näher dargestellt, erfolgt die Fixierung des nach außen gekröpften Überlappungsbereichs 27 des hinteren Segmentes 9 mit dem endseitigen Bereich des vorderen Segments 8 außerhalb des Erntegutstromes, so dass der Erntegutstrom nicht durch hinragende Teile der nicht dargestellten Fixierungselemente an den jeweiligen Fixierungsstellen 20 behindert wird. Die Fixierung kann mittels Schraubverbindungen erfolgen, wobei die Verwendung anderer geeigneter Fixierungsmöglichkeiten denkbar ist Zusätzlich ist im nach außen gekröpften Bereich des hinteren Segmentes 9 umfangseitig eine Vertiefung 21 im dargestellten Ausführungsbeispiel in Form einer Nut 22 vorhanden, wobei in die Nut ein hier nicht näher dargestelltes Dichtungselement einbringbar ist, um einen Dichtungsabschluss im Überlappungsbereich 27 der Segmente 8, 9 sicherzustellen, damit der im Erntegutstrom vorhandene Erntegutsaft während des Überladevorgangs an der Verbindungsstelle nicht heraustreten kann.

Fig. 4 zeigt den Schnitt 8 aus Fig. 1 der erfindungsgemäßen Überladeeinrichtung 10. Der U-förmig ausgebildete Grundkörper 15, 16 des Segmentes 8, 9 der Überladeeinrichtung 10 ist obenseitig abdeckungsfrei ausgebildet. Der abdeckungsfreie Bereich ist mit einem Verschleißblech 23 abgedeckt, welches auf den seitlichen außerhalb des Erntegutstromes liegenden Führungsflächen 17, 18 auswechselbar aufliegt, so dass das Erntegut den Auswurfkrümmer 7 ansatzfrei durchströmen kann. Denkbar ist, dass das Verschleißblech 23 einteilig oder mehrteilig ausgeführt ist Die Fixierung des Verschleißblechs 23 erfolgt, hier nicht näher dargestellt, mittels bekannter Schraubverbindungen an auf den Führungsflächen 17, 18 vorgesehenen Fixierungspunkten 24. Unterhalb der Führungsflächen 17, 18 sind Versorgungsschächte 25, 26 für die Aufnahme der nicht dargestellten Versorgungsleitungen für die Stelleinrichtungen 11, 14 und nicht näher dargestellte, an der Überladeeinrichtung 10 vorhandene Sensorik oder Beleuchtung angeordnet. Die Versorgungsschachte 25. 26 können aus Metall oder Kunststoff hergestellt sein. Denkbar ist zudem, zur Reduzierung des Fertigungsaufwandes, nur einen Versorgungsschacht 25, 26 zu nutzen. Im nicht dargestellten Überlappungsbereich 27 der Segmente 8, 9 sind in vorteilhafterweise Kupplungselemente vorhanden, die die in den Versorgungsschächten 25, 26 geführten Versorgungsleitungen selbsttätig miteinander verbinden.

## Patentansprüche

1. Auswurfkrümmer (7) bestehend aus wenigstens zwei miteinander verbundenen Segmenten (8, 9) zum Variieren der Förderlänge für eine landwirtschaftliche Erntemaschine, insbesondere einen Feldhäcksler (1), wobei wenigstens ein Segment (8, 9) aus einem einteilig geformten, einen abdeckungsfreien Bereich aufweisenden, U- förmig ausgebildeten Grundkörper (15, 16) gebildet ist und die Verbindung der wenigstens zwei Segmente (8, 9) wenigstens bereichsweise überlappend erfolgt, wobei das in Bezug auf die Fließrichtung des Emtegutstromes hintere Segment (9), das vordere Segment (8) im Überlappungsbereich (27) umgreift,
**dadurch gekennzeichnet, dass**
der das vordere Segment (8) umgreifende Bereich des hinteren Segmentes (9) entsprechend der Wandstärke des Grundkörpers (15) des vorderen Segmentes (8) nach außen gekröpft ausgebildet ist, so dass die Verbindung der wenigstens zwei Segmente (8, 9) im Überlappungsbereich (27) in Bezug auf die Fließrichtung des Erntegutstromes ansatzfrei erfolgt.

2. Auswurfkrümmer (7) nach Anspruch 1,
**dadurch gekennzeichnet, dass**
dass die Fixierung der sich überlappenden Bereiche der wenigstens zwei Segmente (8,9) außerhalb des Erntegutstroms liegt.

3. Auswurfkrümmer (7) nach wenigstens einem der vorhergehenden Ansprüche,
**dadurch gekennzeichnet, dass**
der abdeckungsfreie Bereich des einteiligen ausgeführten Grundkörpers (15, 16) des wenigstens einen Segmentes (8, 9) in Bezug auf die Fließrichtung des Erntegutstromes ansatzfrei verschlossen ist.

4. Auswurfkrümmer (7) nach wenigstens einem der vorhergehenden Ansprüche,
**dadurch gekennzeichnet, dass**
der abdeckungsfreie Bereich des einteilig ausgeführten Grundkörpers (15, 16) durch ein auswechselbares Verschleißblech (23) verschlossen ist.

5. Auswurfkrümmer (7) nach wenigstens einem der vorhergehenden Ansprüche,
**dadurch gekennzeichnet, dass**
im nach außen gekröpften Bereich des hinteren Segmentes (9) umfangsseitig wenigstens eine Vertiefung (21) vorhanden ist.

6. Auswurfkrümmer (7) nach wenigstens einem der vorhergehenden Ansprüche,
**dadurch gekennzeichnet, dass**
im Grundkörper (15, 16) des wenigstens einen einteilig ausgeführten Segmentes (8, 9) obenseitig, jeweils seitlich außerhalb des Erntegutstromes liegend, Führungsflächen (17,18) integriert sind.

7. Auswurfkrümmer (7) nach wenigstens einem der vorhergehenden Ansprüche,
**dadurch gekennzeichnet, dass**
die Fixierung des wenigstens einen Verschleißbleches (14) auf den Führungsflächen (15) erfolgt.

8. Auswurfkrümmer (7) nach wenigstens einem der vorhergehenden Ansprüche,
**dadurch gekennzeichnet, dass**
die Versorgungsleitungen für die Stelleinrichtungen (11, 14) und die Sensorik in außenseitig an den Segmenten (8, 9) angeordneten Versorgungsschächten (25, 26) geführt sind, wobei in den sich überlappenden Bereichen der Segmente (8,9) Kupplungselemente vorgesehen sind, die eine durchgängige Verbindung der Versorgungsleitungen herstellen.

## Claims

1. A discharge spout (7) comprising at least two interconnected segments (8, 9) for varying the delivery length for an agricultural harvesting machine, in particular a forage harvester (1), wherein at least one segment (8, 9) is formed from a main body (15, 16) which is formed in one piece and which has a cover-free region and which is of a U-shaped configuration and the connection of the at least two segments (8, 9) is effected in at least region-wise overlapping relationship, wherein the segment (9) which is downstream in relation to the flow direction of the crop material embraces the upstream segment (8) in the overlap region (27),
**characterised in that**
the region of the downstream segment (9) that embraces the upstream segment (8), is of an outwardly cranked configuration corresponding to the wall thickness of the main body (15) of the upstream segment (8) so that the connection of the at least two segments (8, 9) is effected projection-free in the overlap region (27) in relation to the flow direction of the crop material.

2. A discharge spout (7) according to claim 1 **characterised in that** the fixing of the mutually overlapping regions of the at least two segments (8, 9) is outside the flow of crop material.

3. A discharge spout (7) according to at least one of the preceding claims **characterised in that** the cover-free region of the one-piece main body (15, 16) of the at least one segment (8, 9) is closed in projection-free fashion in relation to the flow direction of the crop material.

4. A discharge spout (7) according to at least one of the preceding claims **characterised in that** the cover-free region of the one-piece main body (15, 16) is closed by a replaceable closure plate (23).

5. A discharge spout (7) according to at least one of the preceding claims **characterised in that** at least one recess (21) is provided in the outwardly cranked region of the downstream segment (9) at the periphery.

6. A discharge spout (7) according to at least one of the preceding claims **characterised in that** guide surfaces (17, 18) are integrated in the main body (15, 16) of the at least one one-piece segment (8, 9) at the top side respectively disposed laterally outside the flow of crop material.

7. A discharge spout (7) according to at least one of the preceding claims **characterised in that** the fixing of the at least one closure plate (14) is effected on the guide surfaces (15).

8. A discharge spout (7) according to at least one of the preceding claims **characterised in that** the supply lines for the adjusting devices (11, 14) and the sensor means are guided in supply shafts (25, 26) arranged outwardly on the segments (8, 9), wherein provided in the mutually overlapping regions of the segments (8, 9) are coupling elements which produce a continuous connection of the supply lines.

## Revendications

1. Goulotte d'éjection (7) composée d'au moins deux segments (8, 9) reliés ensemble pour faire varier la longueur d'amenée pour une machine de récolte agricole, en particulier une ensileuse (1), au moins un segment (8, 9) étant constitué d'un corps de base (15, 16) formé d'une seule pièce, présentant une zone sans recouvrement et réalisé en forme de U, et la liaison desdits au moins deux segments (8, 9) étant réalisée au moins en partie avec chevauchement, le segment arrière (9) par rapport au sens d'écoulement du flux de produit de récolte entourant le segment avant (8) dans la zone de chevauchement (27), **caractérisée en ce que** la zone du segment arrière (9) entourant le segment avant (8) est coudée vers l'extérieur en fonction de l'épaisseur de paroi du corps de base (15) du segment avant (8), de sorte que la liaison desdits au moins deux segments (8, 9) s'effectue sans raccord par rapport au sens d'écoulement du flux de produit de récolte dans la zone de chevauchement (27).

2. Goulotte d'éjection (7) selon la revendication 1, **caractérisée en ce que** la fixation des zones de chevauchement desdits au moins deux segments (8, 9) se situe à l'extérieur du flux de produit de récolte.

3. Goulotte d'éjection (7) selon au moins l'une des revendications précédentes, **caractérisée en ce que** la zone sans recouvrement du corps de base (15, 16) réalisé d'une seule pièce dudit au moins un segment (8, 9) est fermée sans raccord par rapport au sens d'écoulement du flux de produit de récolte.

4. Goulotte d'éjection (7) selon au moins l'une des revendications précédentes, **caractérisée en ce que** la zone sans recouvrement du corps de base (15, 16) réalisé d'une seule pièce est fermée par une tôle d'usure (23) remplaçable.

5. Goulotte d'éjection (7) selon au moins l'une des revendications précédentes, **caractérisée en ce que** qu'au moins un renfoncement (21) est présent sur le pourtour de la zone coudée vers l'extérieur du segment arrière (9).

6. Goulotte d'éjection (7) selon au moins l'une des revendications précédentes, **caractérisée en ce que** des surfaces de guidage (17, 18) situées du côté supérieur, chaque fois latéralement à l'extérieur du flux de produit de récolte, sont intégrées dans le corps de base (15, 16) dudit au moins un segment (8, 9) réalisé d'une seule pièce.

7. Goulotte d'éjection (7) selon au moins l'une des revendications précédentes, **caractérisée en ce que** la fixation de ladite au moins une tôle d'usure (14) s'effectue sur les surfaces de guidage (15).

8. Goulotte d'éjection (7) selon au moins l'une des revendications précédentes, **caractérisée en ce que** les lignes d'alimentation pour les dispositifs actionneurs (11, 14) et les capteurs sont guidées dans des gouttières d'alimentation (25, 26) disposées extérieurement sur les segments (8, 9), des éléments d'accouplement qui établissent une liaison continue des lignes d'alimentation étant prévus dans les zones de chevauchement des segments (8, 9).
